# EUROPEAN PATENT APPLICATION

(11) **EP 4 336 955 A1**
(43) Date of publication of application: **13.03.2024**
(21) Application number: 23185157.7
(22) Date of filing: 13.07.2023
(51) Int. Cl.: H04W 76/19

(54) **CONNECTION RESUME PROCEDURE ENHANCEMENTS IN NON-LAST SERVING NETWORK ENTITY**

(30) Priority: 24.08.2022 IN 202241048193
(71) Applicant: Nokia Technologies Oy, 02610 Espoo (FI)
(72) Inventor: Awada, Ahmad, 81249 Munich (DE); Ahmed, Ayaz, 560064 Bengaluru (IN); Gürsu, Halit Murat, 81379 München (DE); Laselva, Daniela, 9270 Klarup (DK)
(74) Representative: Nokia EPO representatives

(57) **Abstract**

Systems, methods, apparatuses, and computer program products for allowing a faster resumption of the connection for RRC inactive state UE. One method may include transmitting, to a selected network entity, a request for a resume configuration associated with a resume identity and at least one primary cell; receiving, from the selected network entity, a response to the request for a resume configuration comprising a resume configuration associated with the at least one primary cells; and transmitting, to a user equipment, a radio resource control reconfiguration message comprising at least one of the resume configurations.

## Description

### TECHNICAL FIELD:

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for allowing a faster resumption of the connection for RRC inactive state user equipment (UE).

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY:

In accordance with some example embodiments, a method may include transmitting, to a network entity, a request for a resume configuration associated with a resume identity and at least one primary cell. The method may further include receiving, from the network entity, a response to the request for a resume configuration comprising at least one resume configuration corresponding to the at least one primary cell. The method may further include transmitting, to a user equipment, a radio resource control message comprising the at least one resume configuration.

In accordance with certain example embodiments, an apparatus may include means for transmitting, to a network entity, a request for a resume configuration associated with a resume identity and at least one primary cell. The apparatus may further include means for receiving, from the network entity, a response to the request for a resume configuration comprising at least one resume configuration corresponding to the at least one primary cell. The apparatus may further include means for transmitting, to a user equipment, a radio resource control message comprising the at least one resume configuration.

In accordance with various example embodiments, a non-transitory computer readable medium comprising program instructions that, when executed by an apparatus, cause the apparatus to perform at least a method. The method may include transmitting, to a network entity, a request for a resume configuration associated with a resume identity and at least one primary cell. The method may further include receiving, from the network entity, a response to the request for a resume configuration comprising at least one resume configuration corresponding to the at least one primary cell. The method may further include transmitting, to a user equipment, a radio resource control message comprising the at least one resume configuration.

In accordance with some example embodiments, a computer program product may perform a method. The method may include transmitting, to a network entity, a request for a resume configuration associated with a resume identity and at least one primary cell. The method may further include receiving, from the network entity, a response to the request for a resume configuration comprising at least one resume configuration corresponding to the at least one primary cell. The method may further include transmitting, to a user equipment, a radio resource control message comprising the at least one resume configuration.

In accordance with certain example embodiments, an apparatus may include at least one processor and at least one memory storing instructions that, when executed by the at least one processor, cause the apparatus at least to transmit, to a network entity, a request for a resume configuration associated with a resume identity and at least one primary cell. The at least one memory and instructions, when executed by the at least one processor, may further cause the apparatus at least to receive, from the network entity, a response to the request for a resume configuration comprising at least one resume configuration corresponding to the at least one primary cell. The at least one memory and instructions, when executed by the at least one processor, may further cause the apparatus at least to transmit, to a user equipment, a radio resource control message comprising the at least one resume configuration.

In accordance with various example embodiments, an apparatus may include first transmitting circuitry configured to perform transmitting, to a network entity, a request for a resume configuration associated with a resume identity and at least one primary cell. The apparatus may further include receiving circuitry configured to perform receiving, from the network entity, a response to the request for a resume configuration comprising at least one resume configuration corresponding to the at least one primary cell. The apparatus may further include transmitting circuitry configured to perform transmitting, to a user equipment, a radio resource control message comprising the at least one resume configuration.

In accordance with some example embodiments, a method may include receiving, from a network entity, a request for a resume configuration associated with a resume identity and at least one primary cell. The method may further include associating at least one stored resume configuration with the resume identity. The method may further include transmitting, to the network entity, a response to the request for a resume configuration comprising a stored resume configuration associated with the at least one primary cell.

In accordance with certain example embodiments, an apparatus may include means for receiving, from a network entity, a request for a resume configuration associated with a resume identity and at least one primary cell. The apparatus may further include means for associating at least one stored resume configuration with the resume identity. The apparatus may further include means for transmitting, to the network entity, a response to the request for a resume configuration comprising a stored resume configuration associated with the at least one primary cell.

In accordance with various example embodiments, a non-transitory computer readable medium comprising program instructions that, when executed by an apparatus, cause the apparatus to perform at least a method. The method may include receiving, from a network entity, a request for a resume configuration associated with a resume identity and at least one primary cell. The method may further include associating at least one stored resume configuration with the resume identity. The method may further include transmitting, to the network entity, a response to the request for a resume configuration comprising a stored resume configuration associated with the at least one primary cell.

In accordance with some example embodiments, a computer program product may perform a method. The method may include receiving, from a network entity, a request for a resume configuration associated with a resume identity and at least one primary cell. The method may further include associating at least one stored resume configuration with the resume identity. The method may further include transmitting, to the network entity, a response to the request for a resume configuration comprising a stored resume configuration associated with the at least one primary cell.

In accordance with certain example embodiments, an apparatus may include at least one processor and at least one memory storing instructions that, when executed by the at least one processor, cause the apparatus at least to receive, from a network entity, a request for a resume configuration associated with a resume identity and at least one primary cell. The at least one memory and instructions, when executed by the at least one processor, may further cause the apparatus at least to associate at least one stored resume configuration with the resume identity. The at least one memory and instructions, when executed by the at least one processor, may further cause the apparatus at least to transmit, to the network entity, a response to the request for a resume configuration comprising a stored resume configuration associated with the at least one primary cell.

In accordance with various example embodiments, an apparatus may include receiving circuitry configured to perform receiving, from a network entity, a request for a resume configuration associated with a resume identity and at least one primary cell. The apparatus may further include associating circuitry configured to perform associating at least one stored resume configuration with the resume identity. The apparatus may further include transmitting circuitry configured to perform transmitting, to the network entity, a response to the request for a resume configuration comprising a stored resume configuration associated with the at least one primary cell.

In accordance with some example embodiments, a method may include receiving, from a last serving network entity, a radio resource control message comprising at least one resume configuration of at least one primary cell. The method may further include storing, while in a radio resource configuration inactive state, the at least one received resume configuration for at least one prepared cell.

In accordance with certain example embodiments, an apparatus may include means for receiving, from a last serving network entity, a radio resource control message comprising at least one resume configuration of at least one primary cell. The apparatus may further include means for storing, while in a radio resource configuration inactive state, the at least one received resume configuration for at least one prepared cell.

In accordance with various example embodiments, a non-transitory computer readable medium comprising program instructions that, when executed by an apparatus, cause the apparatus to perform at least a method. The method may include receiving, from a last serving network entity, a radio resource control message comprising at least one resume configuration of at least one primary cell. The method may further include storing, while in a radio resource configuration inactive state, the at least one received resume configuration for at least one prepared cell.

In accordance with some example embodiments, a computer program product may perform a method. The method may include receiving, from a last serving network entity, a radio resource control message comprising at least one resume configuration of at least one primary cell. The method may further include storing, while in a radio resource configuration inactive state, the at least one received resume configuration for at least one prepared cell.

In accordance with certain example embodiments, an apparatus may include at least one processor and at least one memory storing instructions that, when executed by the at least one processor, cause the apparatus at least to receive, from a last serving network entity, a radio resource control message comprising at least one resume configuration of at least one primary cell. The at least one memory and instructions, when executed by the at least one processor, may further cause the apparatus at least to store, while in a radio resource configuration inactive state, the at least one received resume configuration for at least one prepared cell.

In accordance with various example embodiments, an apparatus may include receiving circuitry configured to perform receiving, from a last serving network entity, a radio resource control message comprising at least one resume configuration of at least one primary cell. The apparatus may further include storing circuitry configured to perform storing, while in a radio resource configuration inactive state, the at least one received resume configuration for at least one prepared cell.

### BRIEF DESCRIPTION OF THE DRAWINGS:

For a proper understanding of example embodiments, reference should be made to the accompanying drawings, wherein:
FIG. 1 illustrates an example of a NR radio resource control (RRC) state machine with RRC state transitions;
FIG. 2 illustrates an example of a UE-triggered transition from RRC_INACTIVE to RRC_CONNECTED;
FIG. 3 illustrates an example of a signaling diagram according to certain example embodiments;
FIG. 4 illustrates an example of another signaling diagram according to certain example embodiments;
FIG. 5 illustrates an example of another signaling diagram according to certain example embodiments;
FIG. 6 illustrates an example of a flow diagram of a method according to various example embodiments;
FIG. 7 illustrates another example of a flow diagram of a method according to some example embodiments;
FIG. 8 illustrates another example of a flow diagram of a method according to certain example embodiments;
FIG. 9 illustrates another example of a flow diagram of a method according to various example embodiments;
FIG. 10 illustrates another example of a flow diagram of a method according to some example embodiments;
FIG. 11 illustrates another example of a flow diagram of a method according to certain example embodiments;
FIG. 12 illustrates another example of a flow diagram of a method according to various example embodiments;
FIG. 13 illustrates another example of a flow diagram of a method according to some example embodiments;
FIG. 14 illustrates an example of various network devices according to some example embodiments;
FIG. 15 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for allowing a faster resumption of the connection for RRC inactive state UEs is not intended to limit the scope of certain example embodiments, but is instead representative of selected example embodiments.

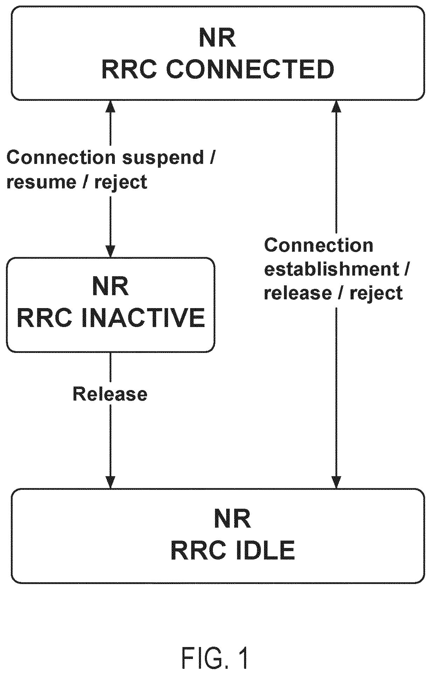

A new independent RRC state, RRC_INACTIVE, may complement some existing states, such as RRC_CONNECTED and RRC_IDLE, to support lean signaling and energy efficiency NR services through an optimized state transition. As shown in FIG. 1, a UE may move from an RRC_IDLE state to an RRC_CONNECTED state after establishing an RRC connection with a cell. The serving cell may then decide to move the UE to RRC Inactive or RRC Idle, for example, after a period of inactivity (*e.g*., no user plane data). Although RRC_INACTIVE was designed primarily for mMTC/mobile IoT (MIoT) services, the RRC Inactive state may efficiently deliver other small/infrequent traffic for eMBB and URLLC services as well.

The RRC_INACTIVE state can allow a suspended RRC connection to be quickly resumed, and begin transmission of small and/or sporadic data, with lower initial access delays (and associated signaling overhead) as compared to the RRC_IDLE state. This may be achieved by allowing a faster transition from RRC Inactive to RRC Connected, such as with a 10 ms cyclic prefix (CP) delay. At the same time, a UE in the RRC_INACTIVE state can achieve similar power savings as in the RRC_IDLE state, for example, by benefiting from a larger period of physical downlink control channel (PDCCH) monitoring (*e.g*., paging) and relaxed measurements (*e.g*., for cell (re)-selection) compared to the RRC_CONNECTED state. Furthermore, compared with the UE remaining in the RRC_CONNECTED state, the RRC_INACTIVE state can minimize mobility signaling, both to the RAN (*e.g*., RRC measurement reporting and handover (HO) messages) and the core network (*e.g*., to/from the access and mobility management function (AMF)) since the UE is still in a CM-CONNECTED state. A UE in the RRC_INACTIVE state can move within an area configured by the RAN without any notification (*i*.*e.,* RAN notification area (RNA)) by using a unique identifier, such as an Inactive-Radio Network Temporary Identifier (I-RNTI). This RNA can cover one or multiple cells, and can be contained within the UE registration area set by the AMF. The UE can run a RAN-based notification area update (RNAU) procedure periodically and/or when the UE re-selects to a cell that does not belong to the configured RNA.

When a UE moves to an RRC_INACTIVE state via an RRC Release message with suspend configuration, the UE access stratum (AS) context (*i.e*., UE Inactive AS Context), which may allow the UE to quickly resume the RRC connection, may be maintained both at the UE and the RAN. When resuming, the UE can be identified by the resume identity I-RNTI, the context of which may contain, for example, bearer configuration parameters according to the latest RRC configuration and AS security context pointing to integrity protection, ciphering algorithms, and AS keys.

Reduced capability (Redcap) UEs can be implemented in a variety of uses with specific requirements. For example, stationary industrial wireless sensors may require communication service availability of 99.99%, end-to-end latency < 100 ms, and a reference bit rate < 2 megabits per second (Mbps) (potentially asymmetric *e.g*., uplink (UL) heavy traffic). In such cases, the battery should last several years, and for safety related sensors, latency requirements may be even lower *(e.g.,* 5-10 ms). In another example, video surveillance may require reference economic video bitrate of 2-4 Mbps, latency < 500 ms, and reliability 99-99.9%. Furthermore, high-end video, such as for streaming, could require 7.5-25 Mbps; in such cases, traffic patterns may be dominated by UL transmissions. Wearable devices may have other requirements; for example, reference bitrates for smart wearable application may be 5-50 Mbps in downlink (DL) and 2-5 Mbps in UL; and peak bit rates of up to 150 Mbps for DL and 50 Mbps for UL. Battery life of such wearable devices should last several days, and up to 1-2 weeks.

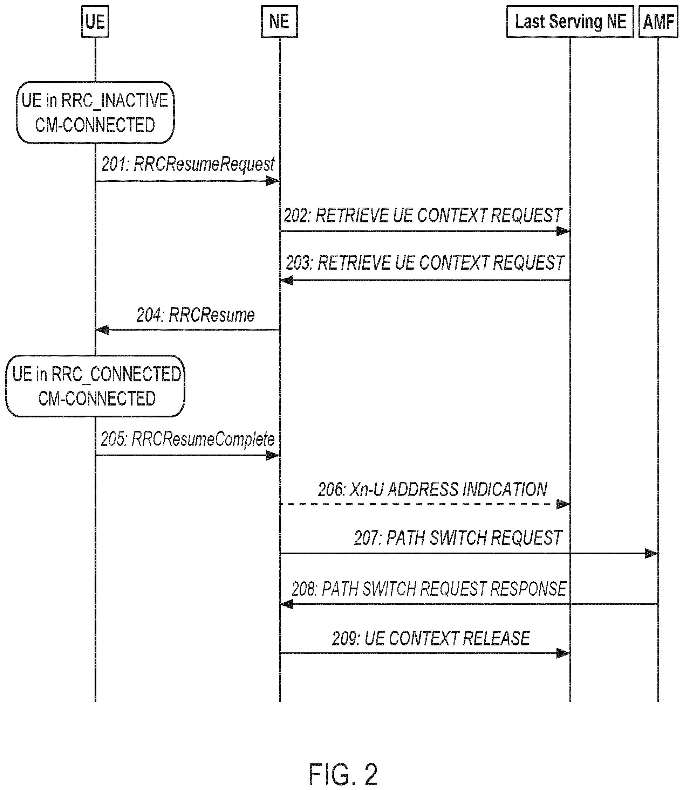

As depicted in FIG. 2, when a UE in an RRC Inactive state initiates resuming its RRC connection with a target network entity (NE) *(e.g.,* eNB, gNB) that is not the last serving NE (by sending the RRC Resume request to the target NE), the target NE may trigger an XnAP Retrieve UE Context procedure to fetch the UE context from the last serving NE. Afterwards, at step 204, the target NE may provide the needed configuration to the UE as part of the RRC Resume message to complete the resume procedure.

However, as compared to the resume with the last serving NE, there are additional components that can add latency to the resume with a non-serving NE. First, the target NE may need to fetch the UE context from the last serving NE *(i.e.,* anchor NE that keeps the UE AS context); this fetching delay can depend on the round-trip-time of the Xn interface, which could be as much as 10 ms. Second, the communication of user plane data between the UE and the target NE cannot begin until the network reconfigures the UE using the RRC Resume message at step 204, and receives the RRC Resume Complete message from the UE at 205. The communication with the target NE cannot begin until steps 201-205 are completed, resulting in significant access delays. When resuming the connection, the UE can only perform contention-based random access (CBRA), which can be subject to collision since the same pool of radio access channel (RACH) resources is shared with other UEs. Alternatively, the UE may remain in an RRC Connected state to avoid resume latencies associated with an RRC Inactive state. However, this alternative may not be feasible if the traffic is delay-sensitive but infrequent and/or if the UE requires power saving modes, which cannot be enabled by the RRC Connected state.

Certain example embodiments described herein may have various benefits and/or advantages to overcome the disadvantages described above. For example, certain example embodiments may enable a faster resumption of a connection with a non-serving NE by addressing multiple sources of additional latency. Some example embodiments may enable a faster resume of suspended RRC connection in non-serving cells of the serving gNB and in non-serving gNB; this may result in lower latency and signaling overhead compared to existing RRC Resume procedures. The delay may be reduced at least by the time to send/receive two RRC messages to/from a new cell (at 201 and 204 in FIG. 2) and two Xn messages (at 202 and 203 in FIG. 2) along with processing delays at the network and UE sides. Various example embodiments may also enable the UE to perform contention-free random access when resuming the connection. Thus, certain example embodiments discussed below are directed to improvements in computer-related technology.

In various example embodiments, a UE may be provided by a last serving cell (*i.e*., before moving the UE from RRC Connected to RRC Inactive) with at least one resume configuration associated to a prepared target cell (different from the last serving cell), which the UE may perform RRC connection resume in the target cell. When the UE decides to resume the connection to that target cell, the UE may apply the stored configuration to resume; otherwise, the UE may fall back to the legacy resume procedure. The UE may be in RRC connected state, and served by a cell of its serving NE.

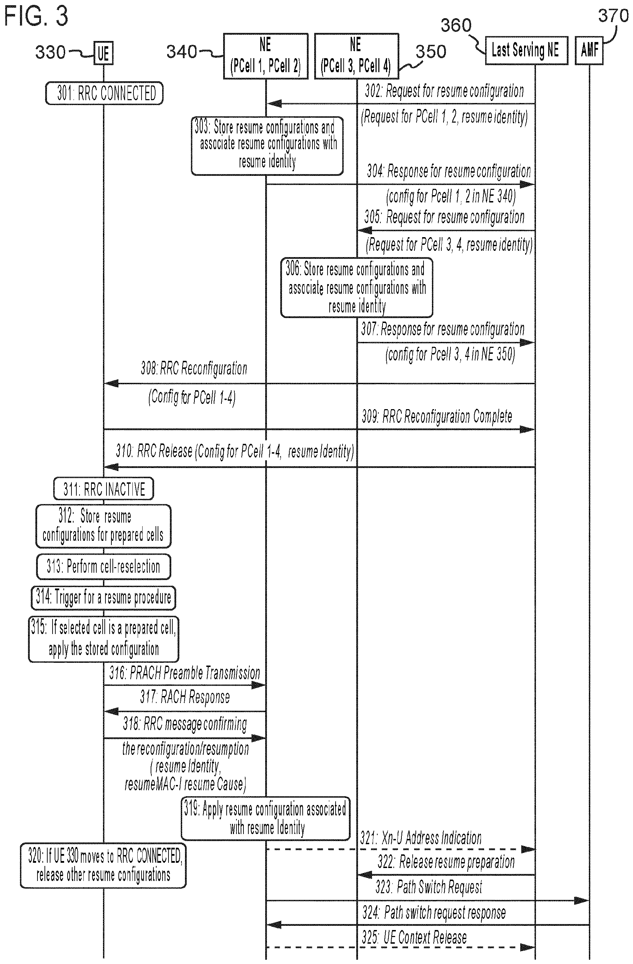

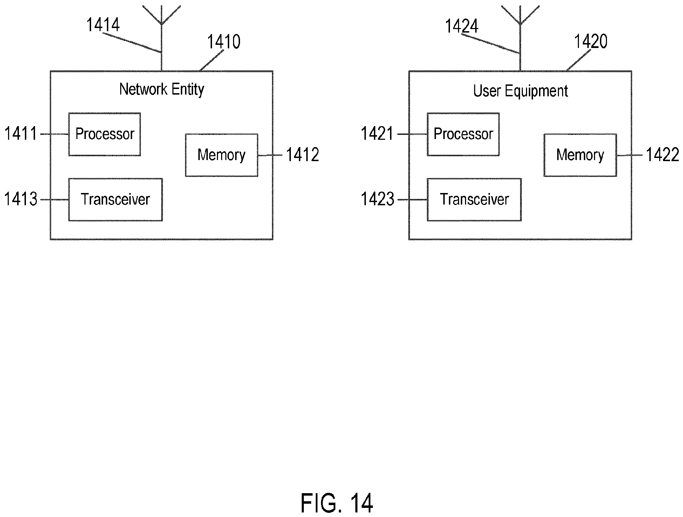

FIG. 3 illustrates an example of a signaling diagram of an example embodiment where the UE resumes a connection in a prepared cell. In particular, FIG. 3 depicts an example embodiment when a UE decides to resume the connection with respect to a prepared cell. When the UE moves to an RRC _INACTIVE state, the UE is expected to retain and store the received resume configuration for the prepared cells. If the UE re-selects a cell which happens to be a prepared cell, the UE may apply the stored resume configurations (if it decides to move to RRC_CONNECTED), and attempt to perform a RACH procedure and in order to transition to a RRC_CONNECTED state. The UE may send the *RRCResumeComplete* message directly, or alternatively, may send a new *RRCResumelndication* RRC message to indicate to the target NE that the UE has transitioned to RRC_CONNECTED. UE 330 may be similar to UE 1420, and target NEs 340 and 350, and last serving NE 360 may be similar to 1410, as illustrated in FIG. 14, according to certain example embodiments.

At 301, UE 330 may be in an RRC Connected state. At 302, NE 360 may request target NE 340 to provide at least one resume configuration for UE 330 for one or more cells (i.e., primary, secondary) of target NE 340. In some example embodiments, this request may be provided in an Xn-AP message *(e.g.,* "Request_for_resume_configuration (Cell1, Cell2, ...)"). In various example embodiments, this request may indicate which cells of target NE 340 the resume configuration is requested (*e.g*., Cell 1, Cell 2, etc.), and may include a resume identity of UE 330. Target NE 340 and target NE 350 may provide multiple resume configurations for different cells that they control, and associate the resume configurations with the resume identity provided by NE 360.

In various example embodiments, the resume identity may identify both UE 330 and last serving NE 360 that hosts UE 330 context. When transitioning UE 330 from RRC_CONNECTED to RRC_INACTIVE state, last serving NE 360 may include an I-RNTI(INACTIVE-*RadioNetworkTemporaryIdentity,* of length either 24bits or 40bits) as the 'resume identity' as a part of a *suspendConfig* in the RRC Release message. Resume Identity(I-RNTI) may be used by UE 330 in *RRCResumeRequest* message to resume UE 330 (in RRC_INACTIVE state) to RRC_CONNECTED state; Resume Identity(I-RNTI) may also be used by target NE 340 to fetch UE 330 context from last serving NE 360.

In response to receiving the request at 302, at 303, target NE 340 may generate the resume configurations for UE 330, and at 304, provide them to NE 360 in a response message transmitted to NE 360, acknowledging the successful handling of the request. In addition, target NE 340 may store resume configurations, and associate the resume configurations with resume identities.

At 305-307, NE 360 may perform the same procedure with target NE 350 as performed at 302-304.

At 308, NE 360 may configure UE 330 with the resume configurations associated with target cells of target NE 340 and target NE 350 prepared at 302-307, respectively. In various example embodiments, NE 360 may reconfigure UE 330 with the resume configurations associated with other prepared cells other than the serving cell of NE 360. In response, at 309, UE 330 may transmit a RRC reconfiguration complete message back to NE 360.

At 310, NE 360 may decide to move UE 330 to an RRC_INACTIVE state, for example, due to data inactivity. In order to move UE 330, NE 360 may transmit to UE 330 a RRC release message with a suspend configuration information element. In particular, the RRC release message transmitted at 310 may include a `SuspendConfig' information element that includes a configuration required to resume the connection; the configuration may include 'I-RNTI - resume identity,' among other fields. Last serving NE 360 may indicate to UE 330 the resume identity that UE 330 would use while resuming the connection. After UE 330 moves to an RRC inactive state, NE 360 may become a last serving NE for UE 330, when UE 330 re-selects a cell under a target NE *(e.g.,* NE 340 or NE 350).

At 311, UE 330 may transition to the RRC_INACTIVE state, and at 312, UE 330 may retain the resume configurations of each of the prepared target cells as received from NE 360.

At 313, UE 330 may perform cell re-selection while in the RRC INACTIVE state.

At 314, UE 330 may be triggered to initiate a resume procedure, for example, because of UL data in a buffer of UE 330 and/or UE 330 receives a paging message indicating incoming DL data. For example, the paging message may indicate whether UE 330 should use the stored resume configurations or the legacy resume procedure to resume the connection.

At 315, after UE 330 is triggered to initiate a resume procedure, and if target NE 340 is one of the prepared target cells associated with a resume configuration stored in the UE Context, UE 330 may apply the associated stored configuration. At 316, UE 330 may then initiate a RACH procedure with target NE 340. At 317, target NE 340 may respond to UE 330 with a RACH response.

Upon successful physical random access channel (PRACH) preamble transmission at 316, and upon receiving the RACH response at 317, UE 330 may, at 318, transmit an RRC message directly to target NE 340 confirming the resume of the RRC connection. The RRC message may contain at least the resume identity (*e.g*., short I-RNTI (24 bits) or full I-RNTI (40 bits)), which target NE 340 may use to identify the resume configuration that applied by UE 330.

In some example embodiments, the RRC message transmitted at 318 may confirm that resuming the RRC connection may be, for example, a *RRCResumeComplete* message or a new message, such as *RRCResumelndication,* to target NE 340.

In various example embodiments, the RRC message confirming the resume at 318 may be a combination of an *RRCResumeRequest* message and *RRCResumeComplete* message.

In certain example embodiments, target NE 340 may configure RACH resources that are dedicated for resuming the connection, allowing NEs 340-360 to differentiate between the newly proposed RRC message confirming the resume of the connection and the legacy RRC Resume Request message, as well as to assign a bigger UL grant in the RACH response if the size of the new RRC message is larger than the RRC Resume Request message.

As an alternative, if target NE 340 that UE 330 wants to resume the connection with is not a prepared cell, UE 330 may fall back to a legacy resume procedure.

At 319, target NE 340 may apply the resume configuration associated with the resume identity. At 320, on transitioning to RRC_CONNECTED state, UE 330 may release the resume configurations of all other prepared target cells. After UE 330 transitions to an RRC connected state with target NE 340, NE 360 may become a last serving cell for UE 330.

At 321, target NE 340 may transmit an Xn-U address indication (providing the forwarding address of selected NE 340) to last serving NE 360. When last serving NE 360 receives the Xn-U address indication from target NE 340, a path switch procedure may be started. Last serving NE 360 may then forward the received Xn message indication to the other prepared target NEs (e.g., target NE 350) to release the resume configurations for UE 330.

At 322, last serving NE 360 may transmit a release resume preparation message to target NE 350. At 323, target NE 340 may transmit to AMF 370 a path switch request, and at 324, AMF 370 may respond to target NE 340 with a path switch request response. At 325, target NE 340 may transmit to last serving NE 360 a UE Context release message.

In various example embodiments, if NE 360 has already prepared some target cells for conditional handover (CHO) (e.g., handover configuration to be executed with respect to a neighbor cell when a condition that is evaluated by UE 330 is met, and decided to move UE 330 to RRC inactive before CHO is executed), NE 360 may indicate to UE 330, and target NE 340 and target NE 350, to use the stored conditional reconfigurations as resume configurations. NE 360 may indicate the same for UE 330, which may use the conditional reconfiguration as resume configurations.

In some example embodiments, target NE 340 and target NE 350 may provide its own forwarding address (provided in Xn-U Address Indication message to avoid loss of DL data buffered in NE 360) as part of the preparation phase where NE 360 requests target NE 340 and target NE 350 to provide a resume configuration. Last serving NE 360 may release the resume configurations at target NE 350 upon receiving the path switch request from the target NE 340 by a new defined message.

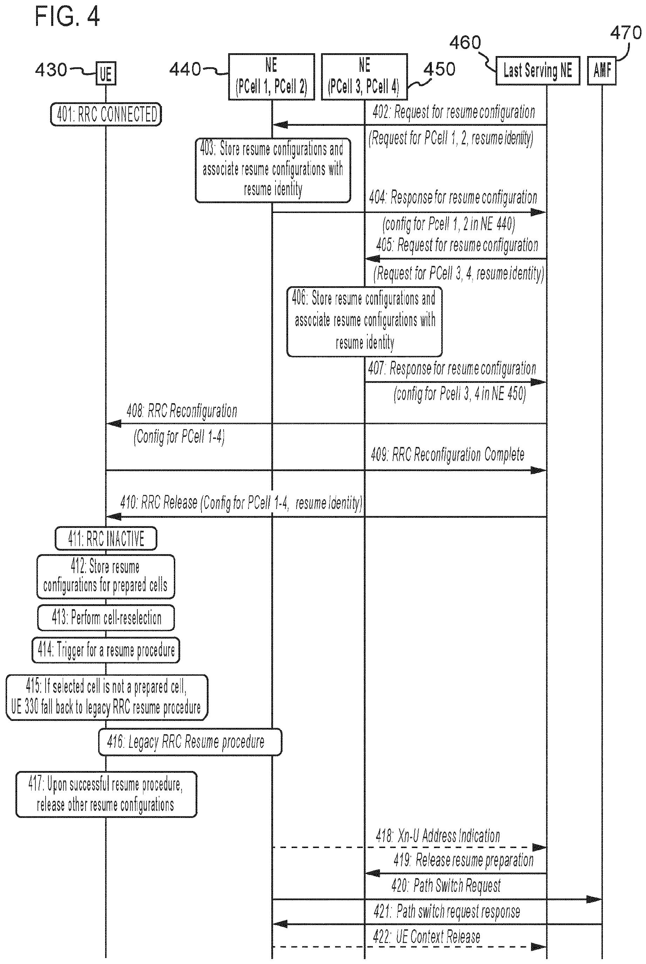

FIG. 4 illustrates an example of a signaling diagram depicting an example embodiment of when the UE resumes a connection in a non-prepared cell. In particular, FIG. 4 shows a situation when the UE decides to resume the connection in a non-prepared cell (*i*.*e.,* in a cell for which it does not have a stored resume configuration). If so, the UE may fallback to legacy resume procedure. If the resume is successful, the UE may release the other stored resume configurations. After a successful resume (as shown in FIGs. 2 and 3), the last serving NE (upon receiving an Xn-U address indication) may transmit an Xn message indication (e.g., step 220) to the other prepared target NEs to release the resume configuration. UE 430 may be similar to UE 1420, and target NEs 340 and 350, and last serving NE 360 may be similar to 1410, as illustrated in FIG. 14, according to certain example embodiments. Steps 401-414 may be similar to steps 301-314, discussed above.

At 415, if a selected cell is not a prepared cell, UE 430 may fallback to legacy RRC resume procedure. At 416, UE 430 and target NE 440 may perform a legacy RRC resume procedure.

Steps 418-422 may be similar to steps 321-325, discussed above.

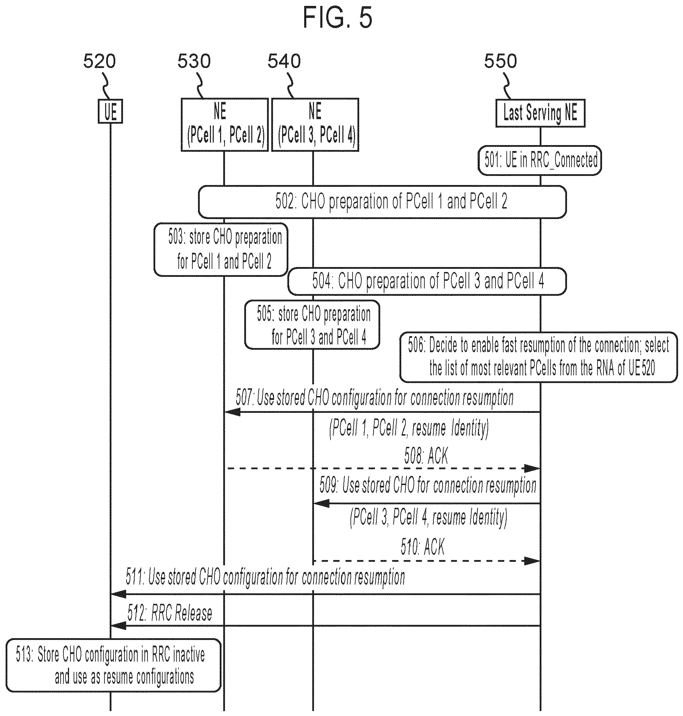

FIG. 5 illustrates an example of a signaling diagram depicting an example embodiment of an Xn procedure to indicate to a target NE to re-use a conditional reconfiguration for fast resumption of the connection. In particular, FIG. 5 shows a situation when the last serving NE instructs the target cells that have been prepared with conditional handover to keep the CHO reconfigurations, and to re-use them for resuming the connection of the UE. Target NEs 530 and 540 may acknowledge the request of the NE 550. NE 550 may instruct the UE to use the stored CHO configurations for resuming the connection after moving to RRC inactive. UE 520 may be similar to UE 1420, and NE 530, NE 540, and NE 550 may be similar to 1410, as illustrated in FIG. 14, according to certain example embodiments.

At 501, NE 550 may serve UE 520, which may be in an RRC_CONNECTED state.

At 502, PCell 1 and PCell 2 of target NE 530 may be prepared as CHO candidate target cells by NE 550. At 503, target NE 530 may store the CHO configuration for prepared PCell 1 and PCell 2.

At 504, PCell 1 and PCell 2 of target NE 540 may be prepared as CHO candidate target cells by NE 550. At 505, target NE 540 may store the CHO configuration for prepared PCell 1 and PCell 2.

At 506, NE 550 may decide to enable fast resumption of the connection, and select a list of the most relevant PCells from the RNA of UE 520.

At 507, NE 550 may transmit to target NE 530 a request to use the stored CHO configuration for connection resumption (including PCell 1, PCell 2, and the resume identity), and at 508, target NE 530 may acknowledge the request of the last serving NE 550.

Similarly, at 509, last serving NE 550 may transmit to target NE 540 a request to use the stored CHO configuration for connection resumption (including PCell 3, PCell 4, and the resume identity), and at 510, target NE 540 may acknowledge the request of NE 550.

At 511, last serving NE 550 may instruct UE 520 to use the stored CHO configurations for resuming the connection after moving to RRC inactive.

At 512, last serving NE 550 may transmit to UE 520 an RRC Release message, and at 513, UE 520 may use the stored CHO configurations in RRC inactive, and use them as resume configurations.

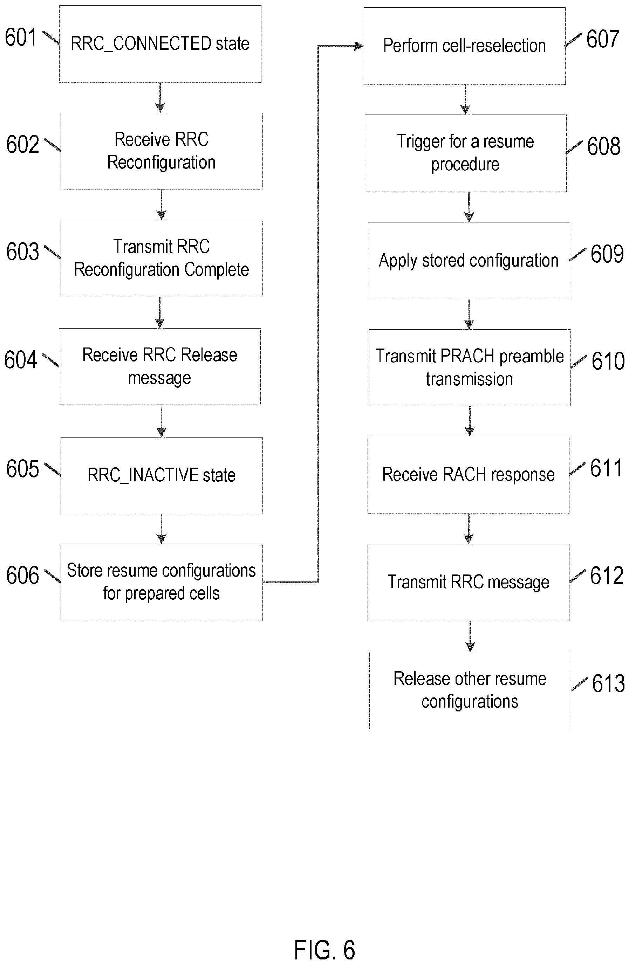

FIG. 6 illustrates an example of a flow diagram of a method that may be performed by a UE, such as UE 1420 illustrated in FIG. 14, according to various example embodiments.

At 601, the method may include operating in an RRC Connected state.

At 602, the method may include receiving from a serving NE, such as NE 1410 illustrated in FIG. 14, a RRC Reconfiguration message including resume configurations associated with target cells of target NEs, such as NE 1410 illustrated in FIG. 14. In various example embodiments, the resume configurations may be associated with other prepared cells other than the serving cell. In response, at 603, the method may include transmitting a RRC reconfiguration complete message back to the serving NE.

At 604, the method may include moving to an RRC_INACTIVE state, for example, due to data inactivity. In order to move to an RRC_INACTIVE state, the method may include receiving a RRC release message with a suspend configuration information element. In particular, the RRC release message received at 604 may include a `suspendConfig' information element that includes a configuration required to resume the connection; the configuration may include 'I-RNTI - resume identity,' among other fields. The RRC release message may indicate the resume identity that the UE would use while resuming the connection.

At 605, the method may include transitioning to the RRC_INACTIVE state, and at 606, the method may include retaining the resume configurations of each of the prepared target cells as received from the last serving NE.

At 607, the method may include performing cell re-selection while in the RRC INACTIVE state.

At 608, the method may include, in response to a trigger, initiating a resume procedure, for example, because of UL data in a buffer of the UE and/or receiving a paging message indicating incoming DL data. For example, the paging message may indicate whether the UE should use the stored resume configurations or the legacy resume procedure to resume the connection.

At 609, after the trigger to initiate a resume procedure, and if the selected NE is one of the prepared target cells associated with a resume configuration stored in the UE Context, the method may include applying the associated stored configuration. At 610, the method may include transmitting a RACH procedure to the target NE. At 611, the method may include receiving a RACH response from the target NE.

Upon successful PRACH preamble transmission, and receiving the RACH response at 611, the method may include, at 612, transmitting an RRC message directly to the target NE confirming the resume of the RRC connection. The RRC message may contain at least the resume identity (e.g., short I-RNTI (24 bits) or full I-RNTI (40 bits)), which the target NE may use to identify the resume configuration that applied by the UE.

In some example embodiments, the RRC message transmitted at 612 may confirm that resuming the RRC connection may be, for example, a *RRCResumeComplete* message or a new message, such as *RRCResumelndication,* to the target NE.

In various example embodiments, the RRC message confirming the resume may be a combination of an *RRCResumeRequest* message and *RRCResumeComplete* message.

At 613, the method may include releasing other resume configurations if the UE moves to an RRC Connected state.

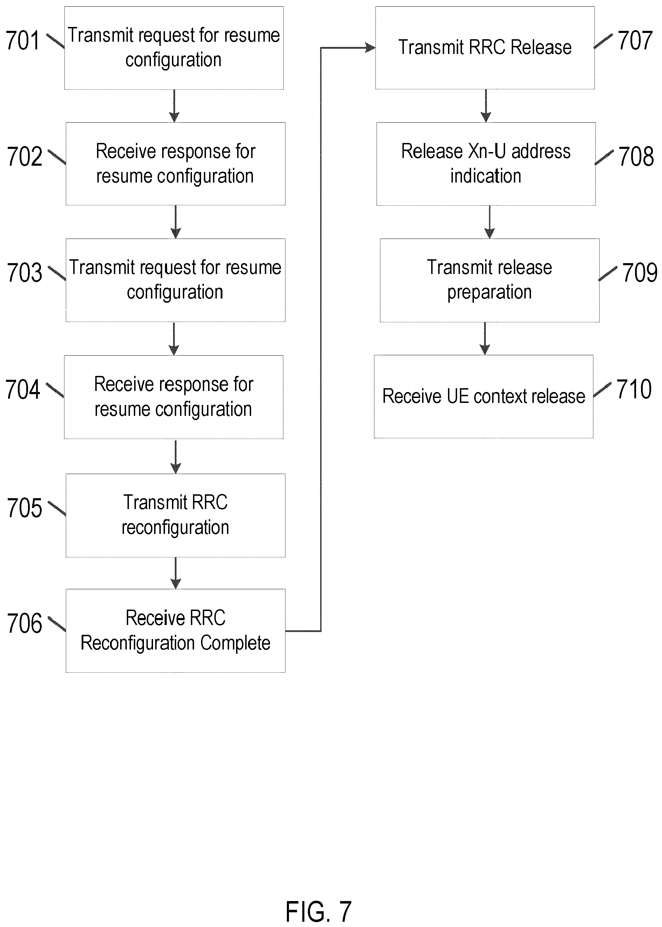

FIG. 7 illustrates an example of a flow diagram of a method that may be performed by a last serving NE, such as NE 1410 illustrated in FIG. 14, according to various example embodiments.

At 701, the method may include requesting a target NE, such as NE 1410 illustrated in FIG. 14, to provide at least one resume configuration for a UE, such as UE 1420 illustrated in FIG. 14, for one or more cells (*i.e*., primary, secondary) of the target NE. In some example embodiments, this request may be provided in an Xn-AP message (*e.g*., "Request_for_resume_configuration (Cell1, Cell2, ...)"). In various example embodiments, this request may indicate which cells of the target NE the resume configuration is requested (*e.g*., Cell 1, Cell 2, etc.), and may include a resume identity of the UE. The target NE may provide multiple resume configurations for different cells that it controls, and associate the resume configurations with the resume identity provided by the last serving NE.

In various example embodiments, the resume identity may identify both the UE and the NE that hosts the UE context. When transitioning the UE from RRC_CONNECTED to RRC_INACTIVE state, the last serving NE may include an *I-RNTI(INACTIVE-RadioNetworkTemporaryldentity;* of length either 24bits or 40bits) as the `resume identity' as a part of a *suspendConfig* in the RRC Release message. Resume Identity(I-RNTI) may be used by the UE in *ResumeRequest* to resume the UE (in RRC_INACTIVE state) to RRC_CONNECTED state; Resume Identity(I-RNTI) may also be used by the target NE to fetch the UE context from the last serving NE.

At 702, the method may include receiving resume configurations for the UE in a response message, acknowledging the successful handling of the request.

At 703-704, the method may be repeated with another target NE, similar to that as performed at 701-702.

At 705, the method may include transmitting to the UE a RRC Reconfiguration message with the resume configurations associated with target cells of the target NEs. In various example embodiments, the RRC Reconfiguration message may reconfigure the UE with the resume configurations associated with other prepared cells other than the serving cell. In response, at 706, the method may include receiving a RRC reconfiguration complete message from the UE.

At 707, the method may include moving the UE to an RRC_INACTIVE state, for example, due to data inactivity. In order to move the UE, the method may include transmitting to the UE a RRC release message with a suspend configuration information element. In particular, the RRC release message transmitted at 707 may include a 'SuspendConfig' information element that includes a configuration required to resume the connection; the configuration may include 'I-RNTI - resume identity,' among other fields. The method may include indicating to the UE the resume identity that the UE would use while resuming the connection.

At 708, the method may include receiving from the target NE where the UE has resumed the connection, an Xn-U address indication (providing the forwarding address of the selected NE). When the last serving NE receives the Xn-U address indication from the target NE that has become a new serving NE, a path switch procedure may be started. The last serving NE may then forward the received Xn message indication to the other prepared target NEs to release the resume configurations for the UE.

At 709, the method may include transmitting a release resume preparation message to other prepared target NE(s). At 710, the method may include last serving NE receiving a UE Context release message from the target NE where UE has resumed the connection.

In various example embodiments, if the last serving NE has already prepared some target cells for conditional handover (CHO) (e.g., handover configuration to be executed with respect to a neighbor cell when a condition that is evaluated by the UE is met, and decided to move the UE to RRC inactive before CHO is executed), the serving NE may indicate to the UE, and the target NEs, to use the stored conditional reconfigurations as resume configurations.

In some example embodiments, the target NE may provide its own forwarding address (provided in Xn-U Address Indication message to avoid loss of DL data buffered in the last serving NE) as part of the preparation phase where the serving NE requests the target NE to provide a resume configuration. The last serving NE may trigger the release of resume configurations at other prepared target NE(s) upon receiving the path switch request from the other target NE where the UE has resumed the connection by a new defined message.

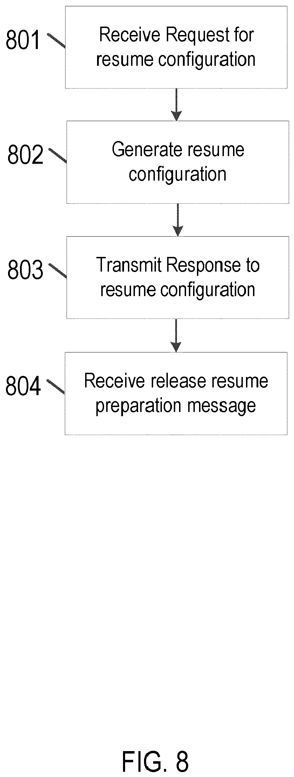

FIG. 8 illustrates an example of a flow diagram of a method that may be performed by a target NE, such as NE 1410 illustrated in FIG. 14, according to various example embodiments.

At 801, the method may include receiving from a last serving NE, such as NE 1410 illustrated in FIG. 14, a Request for resume configuration including at least one resume configuration for a UE, such as UE 1420 illustrated in FIG. 14, for one or more cells (*i.e*., primary, secondary) of the target NE. In some example embodiments, this request may be provided in an Xn-AP message (*e.g*., "Request_for_resume_configuration (Cell1, Cell2, ...)"). In various example embodiments, this request may indicate which cells of the target NE the resume configuration is requested (*e.g*., Cell 1, Cell 2, etc.), and may include a resume identity of the UE. The target NE may provide multiple resume configurations for different cells that it controls, and associate the resume configurations with the resume identity provided by the last serving NE.

In various example embodiments, the resume identity may identify both the UE and the last serving NE that hosts the UE context. When transitioning the UE from RRC_CONNECTED to RRC_INACTIVE state, the last serving NE may include an I-RNTI(INACTIVE-*RadioNetworkTemporaryIdentity;* of length either 24bits or 40bits) as the `resume identity' as a part of a *suspendConfig* in the RRC Release message. Resume Identity(I-RNTI) may be used by the UE in *ResumeRequest* to resume the UE (in RRC_INACTIVE state) to RRC_CONNECTED state; Resume Identity(I-RNTI) may also be used by the target NE to fetch the UE context from the last serving NE.

In response to receiving the request at 801, at 802, the method may include generating resume configurations for the UE, and at 803, transmitting them to the last serving NE in a response message, acknowledging the successful handling of the request. In addition, the method may include storing resume configurations, and associating the resume configurations with resume identities.

At 804, the method may include receiving a release resume preparation message from the last serving NE.

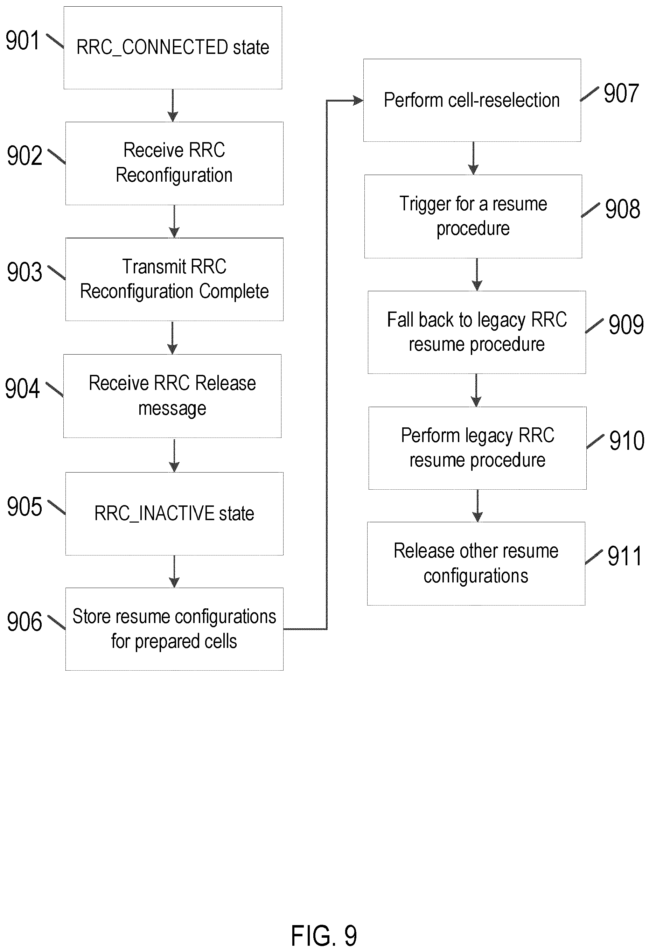

FIG. 9 illustrates an example of a flow diagram of a method that may be performed by a UE, such as UE 1420 illustrated in FIG. 14, according to various example embodiments. Steps 901-908 may be similar to steps 801-808, as discussed above.

At 909, if a selected cell is not a prepared cell, the method may include falling back to legacy RRC resume procedure. At 910, the method may include performing a legacy RRC resume procedure with the target NE. At 911, the method may include, upon successful resume procedure, releasing other resume configurations.

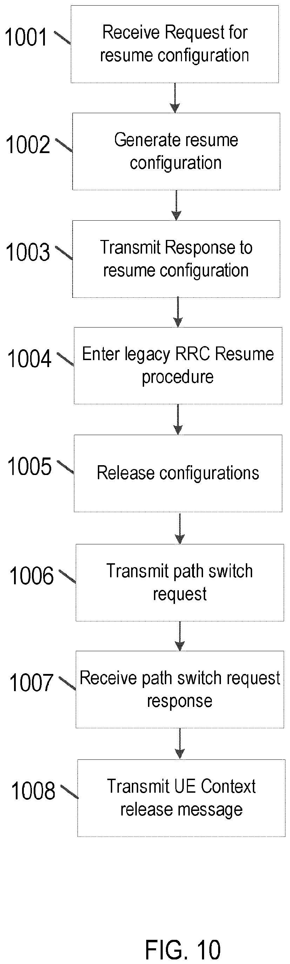

FIG. 10 illustrates an example of a flow diagram of a method that may be performed by a target NE, such as NE 1410 illustrated in FIG. 14, according to various example embodiments. Steps 1001-1003 may be similar to steps 801-803. At 1004, the method may include entering a legacy RRC Resume procedure with a UE, such as UE 1420 illustrated in FIG. 14. Steps 1005-1008 may be similar to steps 808-811.

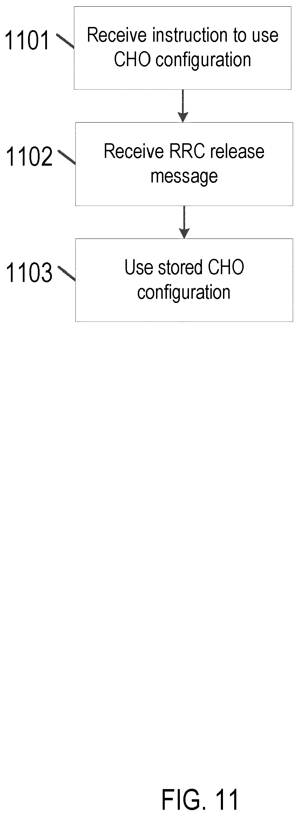

FIG. 11 illustrates an example of a flow diagram of a method that may be performed by a UE, such as UE 1420 illustrated in FIG. 14, according to various example embodiments. At 1101, the method may include receiving instructions from a last serving NE, such as NE 1410 illustrated in FIG. 14, to use a stored CHO configurations for resuming a connection after moving to RRC inactive. At 1102, the method may include receiving, from the last serving NE an RRC Release message, and at 1103, the method may include using the stored CHO configuration in RRC inactive, and use them as resume configurations.

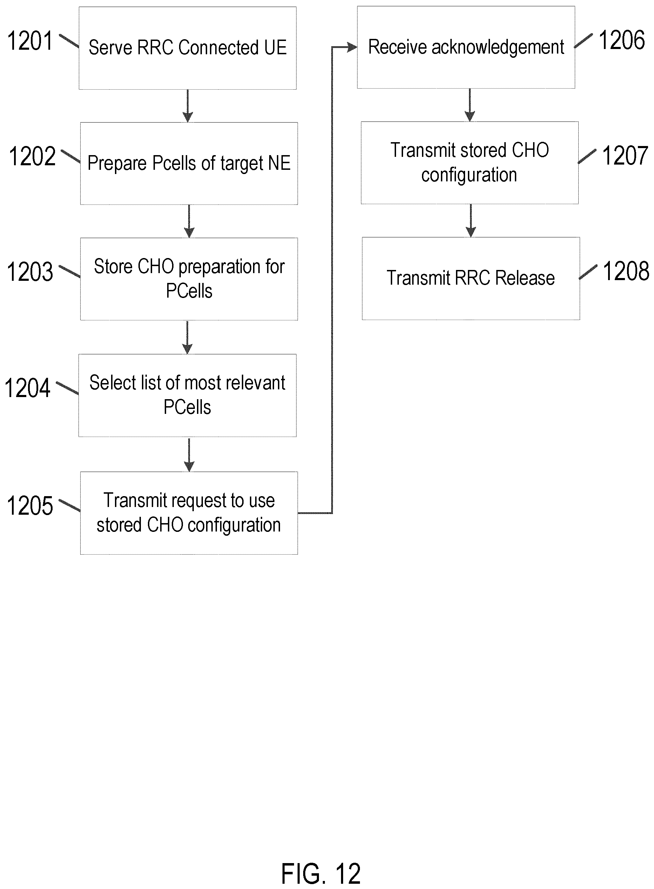

FIG. 12 illustrates an example of a flow diagram of a method that may be performed by a last serving NE, such as NE 1410 illustrated in FIG. 14, according to various example embodiments. At 1201, the method may include serving a UE, such as UE 1420 illustrated in FIG. 14, which may be in an RRC_CONNECTED state.

At 1202, the method may include preparing a PCell 1 and PCell 2 of a target NE, such as NE 1410 illustrated in FIG. 14, as CHO candidate target cells. At 1203, NE 540 may store the CHO configuration for prepared PCell 1 and PCell 2.

At 1204, the method may include deciding to enable fast resumption of the connection, and selecting a list of the most relevant PCells from the RNA of the UE.

At 1205, the method may include transmitting to the target NE a request to use the stored CHO configuration for connection resumption (including PCell 1, PCell 2, and the resume identity), and at 1206, the method may include receiving an acknowledgement of the request from the target NE. Steps 1207-1208 may be similar to steps 1101-1102.

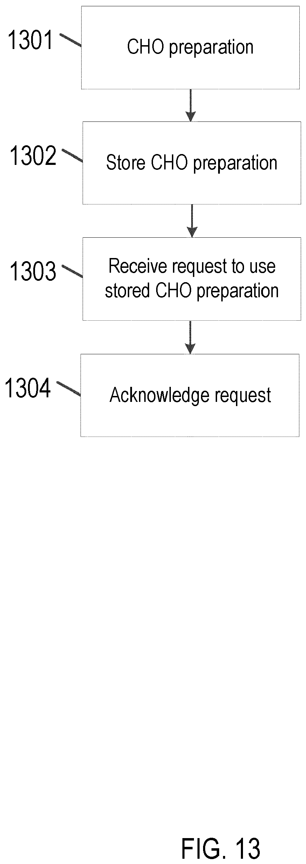

FIG. 13 illustrates an example of a flow diagram of a method that may be performed by a target NE, such as NE 1410 illustrated in FIG. 14, according to various example embodiments. At 1301, the method may include preparing PCell 1 and PCell 2 as CHO candidate target cells. At 1302, the method may include storing the CHO configuration for prepared PCell 1 and PCell 2.

At 1303, the method may include receiving a request to use the stored CHO configuration for connection resumption (including PCell 1, PCell 2, and the resume identity), and at 1304, the method may include acknowledging the request.

FIG. 14 illustrates an example of a system according to certain example embodiments. In one example embodiment, a system may include multiple devices, such as, for example, NE 1410 and/or UE 1420.

NE 1410 may be one or more of a base station, such as an eNB or gNB, a serving gateway, a server, and/or any other access node or combination thereof.

NE 1410 may further comprise at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a fifth generation core (5GC).

UE 1420 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 1410 and/or UE 1420 may be one or more of a citizens broadband radio service device (CBSD).

NE 1410 and/or UE 1420 may include at least one processor, respectively indicated as 1411 and 1421. Processors 1411 and 1421 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 1412 and 1422. The memory may be fixed or removable. The memory may include computer program instructions or computer code contained therein. Memories 1412 and 1422 may independently be any suitable storage device, such as a non-transitory computer-readable medium. The term "non-transitory," as used herein, may correspond to a limitation of the medium itself (i.e., tangible, not a signal) as opposed to a limitation on data storage persistency (e.g., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 1411 and 1421, memories 1412 and 1422, and any subset thereof, may be configured to provide means corresponding to the various blocks of FIGs. 1-5. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 14, transceivers 1413 and 1423 may be provided, and one or more devices may also include at least one antenna, respectively illustrated as 1414 and 1424. The device may have many antennas, such as an array of antennas configured for multiple input multiple output (MIMO) communications, or multiple antennas for multiple RATs. Other configurations of these devices, for example, may be provided. Transceivers 1413 and 1423 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e*., FIGs. 1-5). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 1-5. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g*., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

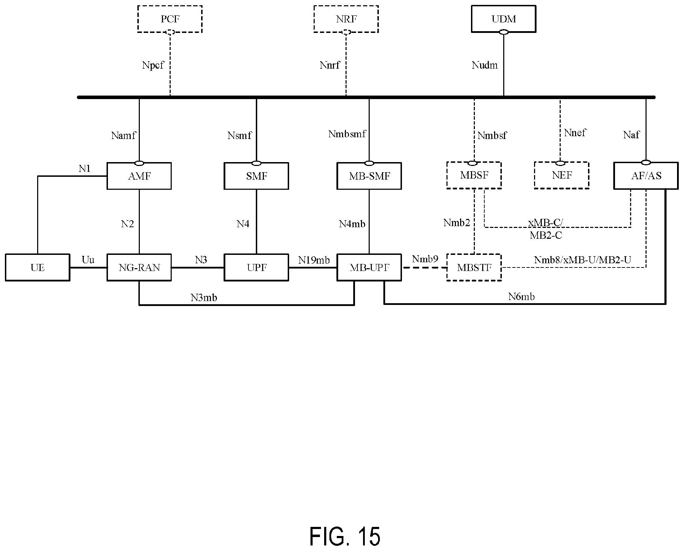

FIG. 15 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 15 may be similar to NE 1410 and UE 1420, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 1411 and 1421, and memories 1412 and 1422, may be included in or may form a part of processing circuitry or control circuitry. In addition, in some example embodiments, transceivers 1413 and 1423 may be included in or may form a part of transceiving circuitry.

In some example embodiments, an apparatus (*e.g*., NE 1410 and/or UE 1420) may include means for performing a method, a process, or any of the variants discussed herein. Examples of the means may include one or more processors, memory, controllers, transmitters, receivers, and/or computer program code for causing the performance of the operations.

In various example embodiments, apparatus 1410 may be controlled by memory 1412 and processor 1411 to transmit, to a network entity, a request for a resume configuration associated with a resume identity and at least one primary cell; receive, from the network entity, a response to the request for a resume configuration comprising at least one resume configuration corresponding to the at least one primary cell; and transmit, to a user equipment, a radio resource control message comprising the at least one resume configuration.

Certain example embodiments may be directed to an apparatus that includes means for performing any of the methods described herein including, for example, means for transmitting, to a network entity, a request for a resume configuration associated with a resume identity and at least one primary cell; means for receiving, from the network entity, a response to the request for a resume configuration comprising at least one resume configuration corresponding to the at least one primary cell; and means for transmitting, to a user equipment, a radio resource control message comprising the at least one resume configuration.

In various example embodiments, apparatus 1410 may be controlled by memory 1412 and processor 1411 to receive, from a network entity, a request for a resume configuration associated with a resume identity and at least one primary cell; associate at least one stored resume configuration with the resume identity; and transmit, to the network entity, a response to the request for a resume configuration comprising a stored resume configuration associated with the at least one primary cell.

Certain example embodiments may be directed to an apparatus that includes means for performing any of the methods described herein including, for example, means for receiving, from a network entity, a request for a resume configuration associated with a resume identity and at least one primary cell; means for associating at least one stored resume configuration with the resume identity; and means for transmitting, to the network entity, a response to the request for a resume configuration comprising a stored resume configuration associated with the at least one primary cell.

In various example embodiments, apparatus 1420 may be controlled by memory 1422 and processor 1421 to receive, from a last serving network entity, a radio resource control message comprising at least one resume configuration of at least one primary cell; and store, while in a radio resource configuration inactive state, the at least one received resume configuration for at least one prepared cell.

Certain example embodiments may be directed to an apparatus that includes means for performing any of the methods described herein including, for example, means for receiving, from a last serving network entity, a radio resource control message comprising at least one resume configuration of at least one primary cell; and means for storing, while in a radio resource configuration inactive state, the at least one received resume configuration for at least one prepared cell.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations that are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3^{rd} Generation Partnership Project
- 5G: 5^{th} Generation
- 5GC: 5^{th} Generation Core
- 6G: 6^{th} Generation
- ACK: Acknowledgement
- AF: Application Function
- AMF: Access and Mobility Management Function
- ARQ: Automatic Repeat Request
- AS: Access Stratum
- ASIC: Application Specific Integrated Circuit
- BS: Base Station
- CBRA: Contention-Based Random Access
- CBSD: Citizens Broadband Radio Service Device
- CHO: Conditional Handover
- CN: Core Network
- CP: Cyclic Prefix
- CPU: Central Processing Unit
- CU: Centralized Unit
- DL: Downlink
- DU: Distributed Unit
- eMBB: Enhanced Mobile Broadband
- eNB: Evolved Node B
- gNB: Next Generation Node B
- GPS: Global Positioning System
- HDD: Hard Disk Drive
- HO: Handover
- I-RNTI: Inactive-Radio Network Temporary Identifier
- IoT: Internet of Things
- LTE: Long-Term Evolution
- LTE-A: Long-Term Evolution Advanced
- MAC-I: Message Authentication Code-Integrity
- Mbps: Megabits per second
- MIoT: Mobile Internet of Things
- MIMO: Multiple Input Multiple Output
- mMTC: Massive Machine Type Communication
- NB-IoT: Narrowband Internet of Things
- NE: Network Entity
- NG: Next Generation
- NG-eNB: Next Generation Evolved Node B
- NG-RAN: Next Generation Radio Access Network
- NR: New Radio
- NR-U: New Radio Unlicensed
- PDA: Personal Digital Assistance
- PDCCH: Physical Downlink Control Channel
- PHY: Physical
- PRACH: Physical Random Access Channel
- QoS: Quality of Service
- RACH: Random Access Channel
- RAM: Random Access Memory
- RAN: Radio Access Network
- RAT: Radio Access Technology
- RedCap: Reduced Capability
- RF: Radio Frequency
- RNA: Radio Access Network-based Notification Area
- RNAU: Radio Access Network-based Notification Area Update
- RNTI: Radio Network Temporary Identifier
- ROM: Read-Only Memory
- RRC: Radio Resource Control
- UE: User Equipment
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network

## Claims

1. An apparatus comprising:
means for transmitting, to a network entity, a request for a resume configuration associated with a resume identity and at least one primary cell;
means for receiving, from the network entity, a response to the request for a resume configuration comprising at least one resume configuration corresponding to the at least one primary cell; and
means for transmitting, to a user equipment, a radio resource control message comprising the at least one resume configuration.

2. The apparatus of claim 1, further comprising:
means for transmitting, to a second network entity, a request for a resume configuration associated with the resume identity and at least one additional primary cell; and
means for receiving, from the second network entity, a response to the request for the resume configuration comprising at least one resume configuration corresponding to the at least one additional primary cell,
wherein the radio resource control reconfiguration message further comprises the resume identity and at least one additional primary cell.

3. The apparatus of any of claims 1 or 2, further comprising:
means for transmitting, to the user equipment, a radio resource control release message or a radio resource control re-configuration message comprising the resume identity and the at least one primary cell.

4. The apparatus of any of claims 1-3, further comprising:
means for, in response to receiving an address indication from the selected network entity, transmitting, to the network entity, a release resume preparation message.

5. The apparatus of any of claims 1-4, further comprising:
means for transmitting, to the selected network entity, an indication to use a stored conditional handover configuration for connection resumption comprising a resume configuration of the at least one primary cell and the resume identity;
means for, in response to transmitting the indication to use the stored conditional handover configuration, receiving, from the selected network entity, an acknowledgement of the indication to use the stored conditional handover configuration; and
means for transmitting, to the user equipment, the indication and the resume identity to use the stored conditional handover configuration.

6. An apparatus comprising:
means for receiving, from a network entity, a request for a resume configuration associated with a resume identity and at least one primary cell;
means for associating at least one stored resume configuration with the resume identity; and
means for transmitting, to the network entity, a response to the request for a resume configuration comprising a stored resume configuration associated with the at least one primary cell.

7. The apparatus of claim 6, further comprising:
means for receiving, from the network entity, an indication to use a stored conditional handover configuration for connection resumption comprising a resume configuration of the at least one primary cells and the resume identity; and
means for, in response to receiving the indication to use the stored conditional handover configuration, transmitting, to the network entity, an acknowledgement of the indication to use the stored conditional handover configuration.

8. A method comprising:
transmitting, to a network entity, a request for a resume configuration associated with a resume identity and at least one primary cell;
receiving, from the network entity, a response to the request for a resume configuration comprising at least one resume configuration corresponding to the at least one primary cell; and
transmitting, to a user equipment, a radio resource control message comprising the at least one resume configuration.

9. The method of claim 8, further comprising:
transmitting, to a second network entity, a request for a resume configuration associated with the resume identity and at least one additional primary cell;
receiving, from the second network entity, a response to the request for the resume configuration comprising at least one resume configuration corresponding to the at least one additional primary cell,
wherein the radio resource control reconfiguration message further comprises the resume identity and at least one additional primary cell.

10. The method of any of claims 8 or 9, further comprising:
transmitting, to the user equipment, a radio resource control release message or a radio resource control re-configuration message comprising the resume identity and the at least one primary cell.

11. The method of any of claims 8-10, further comprising:
in response to receiving an address indication from the selected network entity, transmitting, to the network entity, a release resume preparation message.

12. The method of any of claims 8-11, further comprising:
transmitting, to the selected network entity, an indication to use a stored conditional handover configuration for connection resumption comprising a resume configuration of the at least one primary cell and the resume identity;
in response to transmitting the indication to use the stored conditional handover configuration, receiving, from the selected network entity, an acknowledgement of the indication to use the stored conditional handover configuration; and
transmitting, to the user equipment, the indication and the resume identity to use the stored conditional handover configuration.

13. A method comprising:
receiving, from a network entity, a request for a resume configuration associated with a resume identity and at least one primary cell;
associating at least one stored resume configuration with the resume identity;
and
transmitting, to the network entity, a response to the request for a resume configuration comprising a stored resume configuration associated with the at least one primary cell.

14. The method of claim 13, further comprising:
receiving, from the network entity, an indication to use a stored conditional handover configuration for connection resumption comprising a resume configuration of the at least one primary cells and the resume identity;
in response to receiving the indication to use the stored conditional handover configuration, transmitting, to the network entity, an acknowledgement of the indication to use the stored conditional handover configuration.
